# EUROPEAN PATENT SPECIFICATION

(11) **EP 4 043 228 B1**
(45) Date of publication and mention of the grant of the patent: **06.08.2025**
(21) Application number: 21156282.2
(22) Date of filing: 10.02.2021
(51) Int. Cl.: B41M 1/00, B41M 5/00, H04N 1/60

(54) **METHOD FOR FORMULATING AN INK**
VERFAHREN ZUR FORMULIERUNG EINER TINTE
PROCÉDÉ DE FORMULATION D'UNE ENCRE

(43) Date of publication of application: 17.08.2022
(73) Proprietor: Unilin, BV, 8710 Wielsbeke (BE); Interprint GmbH, 59759 Arnsberg (DE)
(72) Inventor: DAVID, Robert, D-59494 Soest (DE); TADDAY, Malte, D-59755 Arnsberg (DE)
(74) Representative: Unilin Technologies

(56) References cited:
- EP-A1- 0 785 672
- US-A1- 2010 188 704
- DY: "Professional Graphics Print Sample 2005", 1 January 2005 (2005-01-01), XP055905057, Retrieved from the Internet <URL:https://files.support.epson.com/pdf/print_samples/pgg_print%20sample_093005.pdf> [retrieved on 20220324]

## Description

The present invention pertains to the technical field of printed substrates, preferably comprising a paper sheet or thermoplastic foil. Further, the invention relates to a method for formulating an ink suitable for an analog, preferably gravure printing.

Panels featuring decorative surfaces have been present on the market for some time now. Some examples of products comprising such panels are floors, floor beadings, table tops, work tops and wall panels. Such decorative panels typically comprise a base layer with a décor sheet included in a top layer placed closest to the surface. The décor sheet is provided with a desired décor or pattern. The patterns may represent the image of different kinds of wood, or minerals such as marble or granite. The surface of the laminate can be provided with a structure during the laminating procedure which will make the décor more realistic, as for example disclosed in WO 01/96689. Structured press plates may be used when manufacturing such a laminate. A negative reproduction of the structure on the press plate is then being imprinted into the laminate during the laminating procedure. Some of the examples of decorative panels are disclosed in the documents WO 97/47834, WO 2003/061967, US 9365028, WO2007/076853 and EP 1541373.

As disclosed in WO 2007/076853, the decors of these panels may be printed on a continuous web or a substrate by means of analog printing, such as gravure printing. In analog printing, in particular in gravure printing, the décor is obtained by printing with multiple rollers, each roller being directed to the printing of a specific portion of the pattern and of a specific color. The analog, gravure printing is characterized by excellent print quality and high printing speed. On the other hand, it is also characterized by a limited flexibility since it is necessary to engrave printing rollers, and it requires a large set-up time due to the necessary adjustment of the ink colors and the mutual register of the plurality of printing rollers. Under certain circumstances, the printed substrate may have to undergo further processing to allow inspection of the final color result. This can be impregnation in case of a paper substrate, pressing or even varnishing. Therefore gravure printing is economically interesting mostly for high volume production batches.

WO 2020/178666 discloses printing of decorative papers by means of digital printing, such as ink jet printing. Further digital printing techniques are described in, amongst others, EP 1 857 511, EP 2 293 946, WO 2014/084787, WO 2015/140682 and the WO 2015/118451 and EP 2 132 041. In digital printing the colors of the décor are obtained by printing multiple basic inks, for example belonging to a CMYK system, on the same spot according to a configuration provided by a software in such a way to build up the desired color in that spot. Such digital printing may lead to decors of an excellent quality, and digital printing has the potential of being more flexible than analog printing, as it does require only a much more limited set-up procedure. Therefore, digital printing may be suitable even for low volume production batches, start-up production or prototyping. For very high volumes, it may still be a lesser preferred option than gravure printing.

WO 2010/108568 discloses a method for matching digital prototype prints with analog production prints. According to the invention, the printing cylinders, for gravure printing, are engraved on the basis of the CMYK data of the digital print. However, such method does not always achieve the satisfying color match nor the color richness typically associated with the rotogravure printing. Moreover, the method requires the availability of the original CMYK data on the basis of which the prototype digital print was produced.

US 2010/188704 A1 discloses a method for creating an analog file of digitally printed pictures having a patch that allows for a future reproduction of the same image using digital inkjet printing.

The present invention is in the first place aiming at an alternative printed substrate, wherein, in accordance with preferred embodiments, a solution is offered for one or more of the problems with the printed substrates of the prior art. In particular, in according with some embodiments, a more fluent change-over from lower volume digital printing to higher volume analog printing may be obtained. An optimal industrial set-up in the manufacture of printed decors may hence be obtained with the use of digital and analog printing techniques depending on the required printed volume.

With this aim, the present invention relates to a method defined in the independent claim. In the method of claim one is provided a printed substrate comprising a substrate, at least one digitally printed décor and at least one patch, wherein said at least one patch comprises at least one color reference area, said at least one color reference area comprising at least one digital ink and wherein said patch is located on a part of said substrate, said part preferably being substantially free of said at least one printed decor. In this way the patch can show the color or colors used for composing the printed decor, subsequently it may be sufficient to identify said color or colors to be used in analog, preferably gravure printing. In this way, the original digital printing data and/or color data may be unnecessary for allowing reproduction with gravure printing. The position of the patch preferably allows for a spectrophotometrical or a visual read out of the color tone comprised in the color reference area of said patch. The read out of the color tone of the color reference area of said patch may allow determination of a suitable single ink for analog printing press, that reproduces the color tone of said patch.

Preferably the color of said color reference area corresponds to a color tone of an ink for an analog printing press. In this way, a smooth transfer of a digital printing of a décor to an analog printing process may be obtained. Said color tone can be obtained by mixing of pigments and/or dyes with suitable additives to obtain an individual ink for a gravure printing press.

The patch comprises a plurality of color reference areas, preferably each of them related to a respective tone of an ink for a gravure printing press.

Advantageously, one or more of said color reference areas can comprise at least two digital inks, for example mixed according to predetermined proportion in order to provide the desired tone for gravure printing.

It is also possible that the printed substrate comprises multiple printed decors, preferably different from each other. In this case, it is preferable that the printed substrate comprises multiple patches, for example one or at least one patch for each printed decor, so that it may be possible to perform ink formulation of multiple printed decors starting from one printed substrate. Anyway, it is not excluded that one patch pertains or is related to multiple printed decors. In this way one color patch, and one color measuring thereof, can provide for an easy ink composition for multiple analog printed decors.

The patch can be printed onto an edge of said substrate. In another preferred embodiment the patch can be printed on an edge of the printed decor. For example, the patch can be printed in a portion of the substrate that precedes or follows the printed decor, for example along the length of the substrate. In another preferred embodiment, the substrate of the invention comprises at least two printed decors situated apart, in length or width direction, and at least one patch situated between said at least two printed decors.

The printed substrate can comprise a high contrast feature located proximate to an edge of the patch to improve readability or color measurement of the patch. In the preferred embodiment, the high contrast is located close to the color reference area, for example a such a way that each color reference area is at least partially, preferably entirely, surrounded by the color reference area. Preferably the high contrast feature comprises an unprinted area. The high contrast feature allows for a more precise identification of the color printed in the color reference area and therefore an easier preparation of the ink for analogue printing.

The high contrast feature can be positioned and sized to permit the largest possible measurement area. These objectives are met, for example, by providing a rectangular unprinted area typically around the color reference area. However, those skilled in the art will appreciate that other embodiments are possible. For example, it may be desirable that an the color reference area is formed as a circle or is squared and that the high contrast feature is situated around said circle or square. The most important requirement is that the color reference area has a contrast in comparison to said unprinted area, located on or near the edge of the patch.

In the preferred embodiment of the invention, the substrate comprises a paper sheet or a thermoplastic foil. According to a deviant embodiment, the substrate can comprise a board, for example a wood based board, preferably HDF or MDF, a thermoplastic material based board, preferably of PVC or PP, or a cement based or a mineral based board, for example MgO based boards. In an alternative deviant embodiment, the substrate comprises a solid-plastic composite material or engineered wood.

In the preferred embodiment the printed substrate is a décor paper suitable for being subsequently laminated onto a support for forming a panel (or other furniture surface), in such a case it is preferably impregnated with a resin before being laminated. Preferably, said paper is printed prior to impregnation. In the preferred embodiment, said paper is impregnated with an impregnating resin, preferably a thermosetting resin, even more preferably a melamine resin. In a deviating embodiment, said paper is an impregnated paper, that has been at least partially impregnated with said resin before printing the printed décor and the patch.

In case the substrate is a paper or paper-based substrate, it is preferable that the paper is a paper having a base weight of 40 to 130 grams per square meter, e.g. between 60 and 90 grams per square meter. Even more preferably, the paper shows a Gurley value of between 10 and 60 seconds.

In case said substrate comprises a thermoplastic foil, it is preferably made of polyvinylchloride (PVC) or polypropylene (PP). Other example of thermoplastic material for the foil are polyethylene (PE), polyethylene-terephthalate (PET) or thermoplastic polyurethane (TPU). In the case said substrate is a PVC foil, it is preferably a foil of rigid PVC or of PVC comprising an amount of plasticizer below 5 phr.

In a preferred embodiment, the substrate comprises an ink receiver coating on at least one side. Preferably, said ink receiver coating comprises a pigment and/or at least one a binder.

For said pigment, preferably silica particles are used. Preferably the silica particles are silane treated. Silane treatment of the pigments, in general, minimizes dust release of the attained ink receiver layer and the thus treated paper or thermoplastic foil. The silane treatment may relate to a treatment with a coupling agent such as amino-organo-silanes, hydroxysilanes, dipodal silanes and/or other silanes. Preferably, the coupling agent is chosen such that the risk of yellowing upon aging of the attained ink receiver layer is low. Preferably, the coupling agent forms 0.1 to 10% of the total wet weight of the ink receiver layer.

According to variants, for the pigment of said ink receiver layer at least or mainly particles are used chosen from the list consisting of calcium carbonate, alumina, aluminosilicates, ordered mesoporous materials, modified silica, organosilica, modified organosilica, organoalumina, modified alumina, aluminates, modified aluminates, organoaluminates, modified organoaluminates, zeolites, metal organic frameworks and porous polar polymers.

Preferably said pigment has a BET surface area between 10 and 1600 m²/g, and preferably between 15 and 500 m²/g.

In case of presence of the binder in said inkjet receiver coating at least or mainly polyvinyl alcohols are used.

According to variants, the inkjet receiver coating includes, as a binder, a polymer selected from the group consisting of hydroxyethyl cellulose; hydroxypropyl cellulose; hydroxyethylmethyl cellulose; hydroxypropyl methyl cellulose; hydroxybutylmethyl cellulose; methyl cellulose; sodium carboxymethyl cellulose; sodium carboxymethylhydroxethyl cellulose; water soluble ethylhydroxyethyl cellulose; cellulose sulfate; vinylalcohol copolymers; polyvinyl acetate; polyvinyl acetal; polyvinyl pyrrolidone; polyacrylamide; acrylamide/acrylic acid copolymer; polystyrene, styrene copolymers; acrylic or methacrylic polymers; styrene/acrylic copolymers; ethylene-vinylacetate copolymer; vinyl-methyl ether/maleic acid copolymer; poly(2-acrylamido-2-methyl propane sulfonic acid); poly(diethylene triamine-co-adipic acid); polyvinyl pyridine; polyvinyl imidazole; polyethylene imine epichlorohydrin modified; polyethylene imine ethoxylated; ether bond-containing polymers such as polyethylene oxide (PEO), polypropylene oxide (PPO), polyethylene glycol (PEG) and polyvinyl ether (PVE); polyurethane; melamine resins; gelatin; carrageenan; dextran; gum arabic; casein; pectin; albumin; chitins; chitosans; starch; collagen derivatives; collodion and agar-agar. The most preferred variants for the binder are polyvinyl acetates, ethylvinylacetates, block copolymers based on polyvinyl acetate, block copolymers based on polyvinylalcohol, acrylates, latexes, polyvinyl derivaties, VCVAC derivatives, polyurethanes based on polyols and isocyanates, polyurethanes based on polycarbamates and polyaldehydes, e.g. both as a watery dispersion/emulsion or a watery or solvent solution. As stated above preferred binders for the inkjet receiving layer include polyvinyl alcohol (PVA), but according to variants a vinylalcohol copolymer or modified polyvinyl alcohol may be applied. The modified polyvinyl alcohol may be a cationic type polyvinyl alcohol, such as the cationic polyvinyl alcohol grades from Kuraray, such as POVAL C506, POVAL C118 from Nippon Goshei.

It is to be noted that, in case of presence of binder, the ink receiver coating can comprise also a crosslinking agent for the crosslinking reaction of the binder itself. The crosslinking agent is preferably selected from the group comprising: aldehydes, polyaldehydes, dialdehydes, alcohols, boronic acid, borax, polyalcohols, carbamates, polycarbamates, carbonic acids, glyoxal based agent, zirconium-based agents, titanates and polycarbonic acids.

The inkjet receiver coating can further comprise a dispersant. A dispersant is an oligomer or polymer which stabilizes the liquid dispersions of pigment against flocculation. The dispersant can comprise polycarboxylates, polyphosphates, a polyionic polymer, preferably polyDADMAC (Polydiallyldimethylammonium chloride) polyamine or alumina salts.

The inkjet receiver coating can also comprise a flocculant, preferably a metal salt, preferably a cationic metal salt. Preferably said metal salt is chosen from the list consisting of CaCl₂, MgCl₂, CaBr₂, MgBr₂, CMA (Calcium Magnesium Acetate), NH₄Cl, Calcium Acetate, ZrCl₄, calcium nitrate and Magnesium Acetate. The positive ion of the dissolved metal salt will tend to neutralize the electrosteric stabilization function of the pigment. The most preferred cationic metal salts are CaCl₂, MgCl₂, CMA, Calcium Acetate, calcium nitrate and Magnesium Acetate, as the inventors have obtained the best results with these ink reactive compounds. Said flocculant can also be chosen from the list consisting of sodiumaluminate, a double sulphate salt such as alum, polyaluminumchloride, polyacrylate, dicyandiamide (e.g. Floquat DI5 from SNF) and polyacrylamide. The flocculating agent pulls the ink pigments out of the ink dispersion. Thereby the pigments are prevented from penetration to far down into the ink receiver coating. Mainly the vehicle of the ink, e.g. the water in the case of waterbased inks, is absorbed deeper down into the ink receiver coating.

The inkjet receiver coating may also comprise one or more of the following agents:
- Agents altering, more particularly lowering, the pH of said inkjet receiver coating. Preferably the pH of the inkjet receiver coating composition is lowered to pH 5 or lower, by selecting the amount and type of said substance, which selection is within the ambit of the skilled man. Preferably said substance is chosen from the list consisting of formic acid, tartaric acid, acetic acid, hydrochloric acid, citric acid, phosphoric acid, sulfuric acid, AlCl₃ and boronic acid. An adjusted, more particularly lowered pH, preferably to pH 5 or less, increases the chemical affinity of the inkjet receiver coating with the ink and will interfere with the electrosteric stabilization function on the pigment, such that the dispersion of the pigments in the ink will become destabilized quickly.
- Particle surface modifying agents or coupling agents: between 0.05 and 5 g/m², preferably between 0.2 and 2 g/m², e.g. chosen from the non-limiting list consisting of amino silanes, ureido silanes, aldehyde silanes, tetraethylorthosilicate, siliazanes, organically modified silanes, organically modified siliazanes, chlorosilanes, organically modified chlorosilanes, bissilanes, organobissilanes, silsesquioxanes, polysilsesquioxnes, silane oligomers, organically modified silane oligomers, bissilane oligomers, organically modified bissilane oligomers, oligomeric silsesquioxanes, and oligomeric polysilsesquioxanes.
- Additives: wetting agent between 0.005 and 2 g/m², preferably between 0.05 and 1 g/m²; and/or defoaming agent between 0.005 and 2 g/m², preferably between 0.05 and 1 g/m²; and/or fungicide between 0.005 and 2 g/m², preferably between 0.05 and 1 g/m².

In the preferred embodiment, the printed décor paper and the patch are printed using water-based inks, solvent based inks, UV curing inks, EB curing inks or latex ink. In particular, water-based inks represent the preferred solution, in case the substrate comprises a paper sheet. In even more preferred embodiment, said inks are pigment containing water-based inks. In case of substrate comprising thermoplastic foils, UV curing inks, as well as water-based inks, represent the preferred solutions.

Said inks of the digital printed décor preferably belong to a CMYK based set of ink, any it is possible that it also comprises other colors, like light cyan, light magenta, red, brown color in addition or in substitution of the CMYK inks. Red and brown are preferred for printing wood imitating decors. According to the most preferred embodiment said inks of the digital printed décor belong to a CRYK set of ink. It is an ink set where magenta (M) has been replaced by red (R).

The inks of the analog printed décor which may be tuned by means of the patches provided in the example are preferably so-called spot color inks, i.e. colors mixed in accordance with colors available in the design. The color reference areas of the invention therefore preferably comprise the color tune of the required spot color ink. Preferably the patch comprises at least three color reference areas of different color tone. In this way the spot color tones for gravure printing with at least three rollers of respective color can be provided, without a need to reference to the original digital décor data. Preferably, a maximum of eight rollers for printing mutually different spot color is used in the gravure printing. In accordance with a preferred embodiment, a plurality of patches may be available on said printed substrate, wherein at least two patches comprise color reference areas with color tones suitable to tune the inks of gravure printing with a mutually differing number of rollers. For example, a first color patch may be available to enable defining the colors for a three roller gravure printing, e.g. with at least three color reference areas, and a second color patch may be available to enable defining the colors for a six roller gravure printing, e.g. with at least six color reference areas.

Preferably said printed décor represents a wood, stone, concrete or metal imitating decor, anyway it is noted that it can represent any kind of design.

It is to be noted that the presence of the patch forms an inventive idea irrespective of the presence of the printed décor on the substrate. Therefore, according an unclaimed aspect the invention relates to a printed substrate comprising a substrate and at least one patch, wherein said at least one patch comprises at least one color reference area, said at least one color reference area comprising at least one digital ink. In this case, in fact the patch can derive form the print of a file that is separate from the file of the printed décor and therefore it can also be printed on a separate substrate. It is noted that the printed substrate according to the second independent aspect can comprise one or more of the features described in relation to the first independent aspect.

In a preferred embodiment, the color reference areas of the patch according to a second independent aspect of the invention comprises at least two digital inks, preferably a mixture of at least two digital inks.

décor For example, said tone of an ink for analog printing is adjusted by modifying the formulation of said ink for analog printing in such a way that the CIELAB coordinates of the ink for analog printing are as close as possible to the CIELAB coordinates measured on the patch, preferably in such a way that the CIELAB coordinates of the ink for analog printing match the CIELAB coordinates measured on the patch. For example it may be preferable that the CIELAB coordinates of the ink for analog printing differ from the CIELAB coordinates measured on the patch of a maximum of 20%, more preferably of a maximum of 10%, even more preferably of a maximum of 5%.

The method of the invention is particularly advantageous for a fine tuning of a color tone of an ink in a less costly and time saving way. In a preferred embodiment, the at least one color reference area of the patch comprises at least two digital inks, preferably a mixture of at least two digital inks. It is noted that the method of the third independent aspect can provide for a printed substrate having one or more of the features described in relation to the first independent aspect.

In a preferred embodiment, said ink for gravure printing is a UV curable, water-based or solvent-based ink. The ink suitable for a rotogravure or a press printer is compatible with a wide variety of constituents, and it can be formulated to be either a water- or solvent- based ink. The inks obtainable by the method according to the third aspect of the invention are of a wide applicability in different industrial set ups and broadly compatible with different substrates and printing methods.

In the preferred embodiment, the step of measuring comprises measuring of the color by means of a visual inspection or a spectrophotometer for example configured to provide a color measure in the CIELAB space. The method according to the third aspect of the present invention is particularly advantageous as it provides for an easy identification of the colors that are needed for analog printing since the colors forming the printed décor may be separated from the décor itself thereby being easily measured and/or identified. The colors may be obtained even in the absence of the original digital data.

In a preferred embodiment, the digitally printed décor is printed in a multi-pass digital printing process. Alternatively, the digitally printed décor can be printed in a single-pass digital printing process. Multi-pass printing is obtained by more economic printers than single pass printing, thereby providing for printing of very small batches and prototypes. In this case the printed substrate can be printed even by the designer in a laboratory.

Preferably for printing the substrate of the first aspect of the invention, a digital inkjet printer is applied that allows to jet ink droplets with a volume of less than 50 picoliters. Preferably a digital inkjet printer is applied that allows to work with ink droplets of several volumes in one and the same print, or with so-called halftone or gray scale. The possibility of half tone or gray scale printing enables fine nuancing and the further maintaining of an excellent print definition. Preferably a digital inkjet printer is applied that allows to attain a definition of at least 200 dpi, or even better at least 300 dpi (dots per inch).

In the preferred embodiment, the method of the third aspect of the invention, further comprises an additional step of mixing the tone of an ink for gravure printing with a blend comprising additional constituents chosen from a group comprising solvents, dispersants, enhancers, antioxidants and stabilizers, to obtain an ink for gravure printing press. This can make the inks obtainable by the method according to a third aspect of the invention suitable for a variety of substrates, most preferably for both paper based substrate and thermoplastic foil substrates

Preferably, the solid content of the inks of the invention varies from about 1 to about 60 wt. %.

In an exemplary embodiment, the inks formulated by the method according to the third aspect of the invention can comprise pigments. The pigments can be organic or inorganic. For colored pigment can be preferably made use of organic pigment, whereas for white pigment it is preferably made use of inorganic pigments like titanium dioxide (TiO₂). The inks of the invention can comprise organic salts for dispersing the pigments, and for obtaining further advantages related to color homogeneity in the printed decor. The ink for analog printing can comprise other kind of additives like for example, cellulose derivatives, such as nitrocellulose s. The cellulose derivatives can offer a good degree of dimensional stability and a limited resistance to acids and alkalis. Other possible additives are plasticizers. Plasticizer could be classified as jellying with a good able to dissolve the cellulose derivatives. Some non-limiting examples are phthalates, citrates and adipates, or non-jellying, long chain oils and fatty acids, such as stearic ester. The inks of the present invention preferably comprise binders. Binders allow a good pigment dispersion, printing of the decors on the wide variety of the substrate types, laminating of the printed materials and a good solubility in the solvent system preferred. Some non-limiting examples of the binders for the ink formulations are the polyurethane resins which confer flexibility, elasticity, a good thermo resistance (particularly polyurethanes with high and medium molecular weights). The inks further may comprises catalysts, such as the titanium acetyl acetonate. The gloss degree agents may be added to control a gloss degree, and some non-limiting examples are ketonic resins, maleic resins and the like. As enhancers of gloss degree polyamide resins are used. According to one embodiment, the method is suitable for formulation of glossy inks, with high thermo-resistance and resistance to scratch, which preferably contain acrylic and polyester resins together with isocyanate hardener. Acrylic resins have good adhesion on particularly thermoplastic foils and coated films and are suitable for the water-based ink formulations. The ink formulations typically further comprise stabilizers and antioxidants, which prevent the oxidation. Non limiting examples of antioxidants are BHT (β-hydroxyl toluene), Irganox-CIBA ant the like.

Preferably, the method of the invention, can further comprise the step of printing said printed décor on a second substrate via an analogue printing technique, preferably gravure printing. Said second substrate can comprise the same features described in relation to the printed substrate of the first independent aspect. Said analog printing is performed by using the inks as adjusted according to the third independent aspect. It is noted that in case the method of the third aspect comprises the step printing a second printed substrate it relates to a method for manufacturing an analog printed substrate.

In the preferred embodiment, the second substrate comprises a standard printing paper, like the one used for rotogravure, having a weight between 35 and 90 grams per square meter is provided with a printed décor and a patch comprising a mixture of at least two inks in accordance with the first aspect of the invention.

Preferably, the steps of the method of the third aspect is part of a process for manufacturing panels, for example floor, wall, ceiling or furniture panels. In this case it is preferable that said second substrate printed via an analogue printing technique, and/or the digitally printed substrate of the first aspect, is laminated or otherwise attached to a support.

Thereto, in an unclaimed aspect, the present invention aims at an improved method for manufacturing panels having a decorative surface, for example floor, wall, ceiling or furniture panels, and seeks, in accordance with several of its preferred embodiments, to solve one or more of the problems arising in the state of the art.

According to a further unclaimed aspect, the invention relates to a method for manufacturing panels having a decorative surface, the method comprising steps of: providing a printed substrate, wherein said printed substrate can be:
either a printed substrate, in accordance with the first aspect of the invention, provided with a printed décor and a patch comprising at least one color reference area comprising at least one ink, or
a second substrate printed using an ink formulated by the method according the third aspect of the invention;
laminating said printed substrate onto a support to obtain a laminated panel.

Said step of providing the printed substrate can comprise providing the printed substrate from a stock, for example uncoiling the printed substrate from a roll. In some embodiments, said step of providing the printed substrate comprises one or more of the steps of the method of the third aspect.

In case the printed substrate is the substrate of the first aspect, the method can comprise the step of cutting away the patch from said printed substrate, or otherwise separate the patch from the printed decor, before said step of laminating or otherwise attaching the printed substrate on the support. In this way only the portion of the substrate comprising the printed décor is attached to the support. Alternatively, it is also possible that the printed substrate is first laminated, and the patch is subsequently cut away. In this way the substrate, for example comprising multiple décors, is attached to one panel and that the patch can be cut away, for example, at the time of cutting the panel into multiple boards each board showing a respective printed décor.

In the preferred embodiment, said support comprises, or is essentially made of, a wood-based material, such as an MDF or HDF (Medium or High Density Fiberboard) or a material consisting of or essentially made of wood particleboard. In another preferred embodiment the support can comprise, or is essentially made of, a thermoplastic material, for example PVC or PP, such as LVT (Luxury Vinyl Tile) or SPC (Solid Polymer Composite). Alternatively, the support can be in the form of a cement based or a mineral based board, for example MgO based boards.

In the preferred embodiment, the method for manufacturing panel can comprise the step of impregnating the substrate with a resin prior to said step of attaching the substrate. This is especially the case when the substrate comprises a paper sheet. Said resin is preferably a thermosetting resin, for example a melamine-based resin. In a deviant embodiment the printed substrate can be impregnated before printing. The resin is preferably a thermosetting resin, more preferably a melamine-based resin.

Said step of attaching the printed substrate to the support can preferably comprise direct pressed lamination (DPL), high pressure lamination (HPL) or thermal lamination. DPL and HPL are particularly preferred in case the printed substrate comprises a paper sheet. Thermal lamination is particularly preferred when the printed substrate comprises a thermoplastic foil.

According to the DPL process (Direct Pressure Laminate) the printed substrate is provided with the resin. Afterwards a stack is formed comprising at least the support, said printed substrate and possibly a protective layer on top of said printed substrate, wherein said protective layer or overlay is based on resin and/or paper as well. Said stack is pressed and the press treatment results in a mutual connection or adherence of the printed substrate, the support and the protective layer, as well as in a hardening of the resin present in the stack. It is of course not excluded that the method of the invention would form part of a CPL (Compact Laminate) or an HPL (High Pressure Laminate) process in which the printed substrate is hot pressed at least with a plurality of resin impregnated core paper layers, e.g. of so called Kraft paper, forming a substrate underneath the printed substrate, and wherein the obtained pressed and cured laminate layer, or laminate board is, in the case of an HPL, glued to a further substrate, such as to a particle board or an MDF or HDF board.

The printed substrate comprising a thermoplastic foil can be laminated to a thermoplastic wear layer, preferably transparent, through a thermal lamination process, e.g. by using one or more heated press rollers. The obtained top layer may then be glued or thermally laminated to the support. The printed substrate can also be termally laminated directly onto the support, with or without said wear layer.

As it is evident from the previous two paragraphs, the method of said further unclaimed aspect can comprise the step of providing said panel with a wear layer. In the preferred embodiment said wear layer is laminated, or otherwise attached to the printed support, at the same time of laminating the substrate onto the support. Anyway, the wear layer can be laminated in a separate passage.

The method for manufacturing the panel can comprise the step of providing the upper surface of the panel with a relief. Said relief being preferably in register with said printed decor. The relief is preferably provided during the step of attaching the printed substrate to the panel by means of structured embossing plate or roller.

Preferably, the method for manufacturing the panel further comprises the step of applying a counter layer or balancing layer at the surface of the support opposite the printed substrate. The case of a paper-based printed substrate, the counter layer or balancing layer preferably comprises a paper layer and, possibly, a thermosetting resin, preferably the same resin as the top layer.

The method for manufacturing the panel can comprise the step of providing such panels with coupling elements configured for being coupled with coupling elements of adjacent panels thereby limiting or preventing drifting apart of said panels in a direction that is perpendicular to the plane of the panel and/or in a direction that lies in the plane of said panel. Said coupling element being preferably in form of a tongue and a groove.

With the intention of better showing the characteristics according to the invention, in the following, as an example without limitative character, an embodiment is described, with reference to the accompanying drawings, wherein:
figure 1 schematically shows a top view of a part of a printed substrate;
figure 2 a top view of a part of the printed substrate in according to an alternative embodiment;
figure 3 show an enlarged view of the section along plane III-III of figure 1;
figure 4 shows some steps in a method to the invention
figure 5 shows a perspective view of a floor panel;
figure 6 show an enlarged view of the section along plane VI-VI of figure 5.

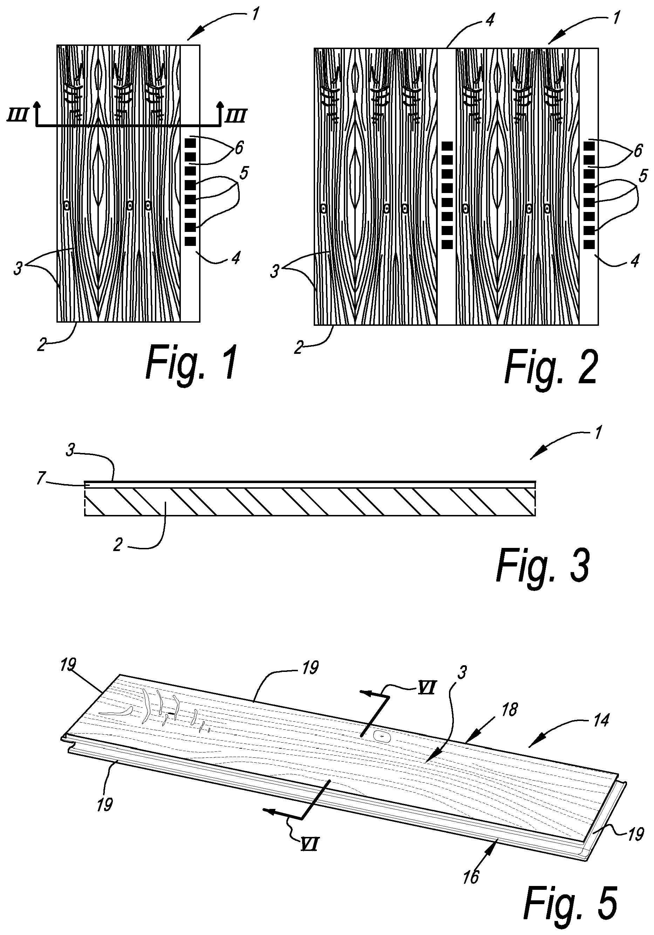

Figure 1 shows a printed substrate 1 comprising a substrate 2, a digitally printed décor 3 and a patch 4. Said patch 4 comprises at least one, preferably a plurality of color reference areas 5 each being printed with a respective color forming the printed décor 3.

Preferably the color of each color reference area 5 is obtained by mixing multiple inks printed with a digital printing technique.

In the example shown in figure 1, each color reference area 5 is surrounded by high contrast feature 6, preferably unprinted areas.

Figure 2 shows an alternative embodiment that differs in that shown in figure 1 in that the printed substrate 1 comprises multiple printed decors 3 and multiple respective patches 4.

Figure 3 shows that the substrate 2 comprises a paper sheet and an ink receiver coating 7 adapted to receive the printed décor 3 and the patch 5. In the example, said ink receiver coating 7 comprises a binder, preferably polyvinyl-alcohol, a binder, preferably silica particles, and a cationic metal salt.

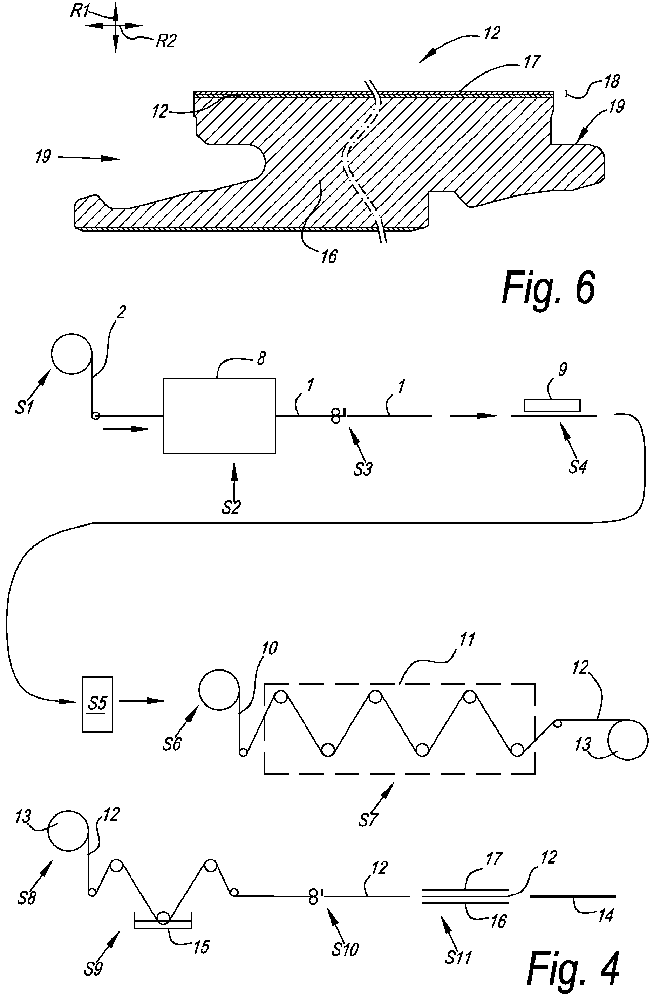

Figure 4 shows some step in a method according to the aspect of the invention, that comprises the step S1 of feeding the substrate 2 to a digital inkjet printer 8, preferably a multi-pass printer. According to alternative examples the printer can be a single pass inkjet printer. The digital printer 8 performs a step S2 of printing at least a décor 3 and the respective patch 4.

The printed substrate 1 is then optionally cut into sheets in cutting step S3. It should be understood by a skilled person that in an alternative embodiment, instead of optional cutting, the printed substrate can be rolled on a winding station, and can be later unwinded for the further processing. The printed substrate 1 is then subjected to the step S4 of measuring the CIELAB coordinates of the colors in the color reference areas 5 of the patch 4 with a spectrophotometer 9. Said coordinates are used in a subsequent step of Gravure printing ink formulation S5.

Subsequently a second substrate 10, preferably a paper sheet, is fed, in a step S6, to a gravure press 11 for printing, in a step S7, the décor 3 on the second substrate 10 using the ink formulated in step S5 on the basis of the coordinated measured in step S4. In the example, the obtained second printed substrate 12 is then coiled on a roll 13.

In the illustrated example, the method according to the third aspect is part of a method for manufacturing a floor panel 14. Therefore, the method further comprises a step S8 of uncoiling the second printed substrate 12 from the roll 13 and a step S9 of impregnating the second printing substrate 12 with a thermosetting resin, preferably melamine-based, in an impregnation station 15. The impregnated second printed substrate 12 is then cut into sheets in a cutting step S10. The sheets of second printed substrate 12 are subsequently sandwiched between a support 16 and a wear layer 17 and press laminated into a DPL process S11.

The obtained floor panel 14 is shown in figures 5 and 6. The support is preferably made of a wood-based material, in particular MDF or HDF. The panel 14 comprises a top layer 18 that comprises the second printed substrate 12, provided with the analog printed décor 3, and the wear layer 17. In the example, the wear layer comprises a transparent paper sheet impregnated with a melamine-based thermosetting resin and comprises wear resistant particles. The floor panel 14 further comprises coupling elements 19, in form of a tongue and groove, for coupling with an adjacent floor panel 14 in floor covering. Said coupling elements 19 can be provided in the panel in a not shown step of the method of figure 4 that follows the DPL laminating process S11.

The present invention is in no way limited to the above described embodiments, but such methods, and substrates may be realized according to several variants without departing from the scope of the invention which is defined only by the appended claims.

## Claims

1. A method for formulating an ink for a gravure printing press, said method comprising:
digital inkjet printing of a décor (3) and a patch (4) onto a substrate (2), said patch (4) comprising between three and eight color reference areas (5), said color reference areas (5) comprising the digital ink-jet inks used for composing the printed décor, and wherein said patch (4) is located on a part of said substrate (2), said part being substantially free of said décor (3);
measuring the colors of said color reference areas (5) of the patch (4);
adjusting a tone of an ink for gravure printing on the basis of said measure.

2. The method according to claim 1, wherein said measuring is performed using a spectrophotometer.

3. The method according to any one of claims 1 or 2, wherein it comprises an additional step of mixing the tone of an ink for gravure printing with a blend comprising additional constituents chosen from a group comprising solvents, dispersants, enhancers, antioxidants and stabilizers, to obtain an ink for gravure printing press.

4. The method according to any of the claim from 1 to 3, wherein said ink for gravure printing is an UV curable, water-based or solvent-based ink.

5. The method according to any of the claim from 1 to 4, wherein said digital printing step is a multi-pass digital printing.

6. The method according to claim 1, wherein said color reference areas comprise a mixture of digital inkjet inks.

7. The method according to claim 1, wherein said digital inkjet inks are selected from the group comprising Cyan, Yellow, Magenta, Black, Red, light cyan, light magenta and Brown.

8. The method according to claim 1, comprising printing at least two printed décors (3), preferably different from each other, situated apart and wherein said at least one patch (4) is printed between the said at least two printed décors (3).

9. The method according to claim 8, wherein it comprises printing multiple patches (4), preferably one patch (4) for each printed décor (3).

10. The method according to claim 1, wherein said patch (4) is printed next to an edge of the printed substrate.

11. The method according to claim 1, wherein said substrate (2) comprises an ink receiver layer (7).

## Patentansprüche

1. Verfahren zur Formulierung einer Druckfarbe für eine Tiefdruckpresse, wobei das oben genannte Verfahren das Folgende umfasst:
das Inkjet-Digitaldruck eines Dekors (3) und eines Einsatzes (4) auf ein Substrat (2); wobei der oben genannte Einsatz (4) zwischen drei und acht Farbreferenzbereiche (5) umfasst; wobei die oben genannten Farbreferenzbereiche (5) die Inkjet-Digitaldruckfarben umfassen, die für die Zusammensetzung des gedruckten Dekors verwendet werden; und wobei der oben genannte Einsatz (4) auf einem Teil des oben genannten Substrats (2) angebracht ist; wobei der oben genannte Teil im Wesentlichen frei von dem oben genannten Dekor (3) ist;
das Messen der Farben der oben genannten Farbreferenzbereiche (5) des Einsatzes (4);
das Anpassen eines Farbtons einer Tiefdruckfarbe auf der Grundlage der oben genannten Messung.

2. Verfahren nach Anspruch 1, wobei die oben genannte Messung unter Verwendung eines Spektralphotometers durchgeführt wird.

3. Verfahren nach einem der Ansprüche 1 oder 2, wobei es einen zusätzlichen Schritt umfasst, wobei der Ton einer Tiefdruckfarbe mit einer Mischung gemischt wird, die zusätzliche Bestandteile umfasst, die aus einer Gruppe ausgewählt sind, die Lösungsmittel, Dispergiermittel, Verstärkungsmittel, Antioxidationsmittel und Stabilisatoren umfasst, um eine für eine Tiefdruckpresse vorgesehene Druckfarbe zu erzielen.

4. Verfahren nach einem der Ansprüche 1 bis 3, wobei die oben genannte Tiefdruckfarbe eine durch UV-Bestrahlung härtbare Farbe, eine Farbe auf Wasserbasis oder eine Farbe auf Lösungsmittelbasis ist.

5. Verfahren nach einem der Ansprüche 1 bis 4, wobei der oben genannte Digitaldruck-Schritt einen Mehrfachdurchlauf-Digitaldruck darstellt.

6. Verfahren nach Anspruch 1, wobei die oben genannten Farbreferenzbereiche eine Mischung aus Inkjet-Digitaldruckfarben umfassen.

7. Verfahren nach Anspruch 1, wobei die oben genannten Inkjet-Digitaldruckfarben aus der Gruppe ausgewählt sind, die Cyan, Gelb, Magenta, Schwarz, Rot, Hellcyan, Hellmagenta und Braun umfasst.

8. Verfahren nach Anspruch 1, das Folgende umfasst: das Drucken von mindestens zwei bedruckten Dekoren (3), die vorzugsweise voneinander verschieden sind und voneinander beabstandet angeordnet sind; und wobei der oben genannte mindestens eine Einsatz (4) zwischen den mindestens zwei bedruckten Dekoren (3) angeordnet ist.

9. Verfahren nach Anspruch 8, wobei es das Drucken mehrerer Einsätze (4), vorzugsweise eines Einsatzes (4) für jedes bedruckte Dekor, umfasst.

10. Verfahren nach Anspruch 1, wobei der oben genannte Einsatz (4) an einer Seite einer Kante des bedruckten Substrats aufgedruckt wird.

11. Verfahren nach Anspruch 1, wobei das oben genannte Substrat (2) eine Tintenempfangsschicht (7) umfasst.

## Revendications

1. Procédé destiné à la formulation d'une encre destinée à une presse d'héliogravure, ledit procédé comprenant le fait de :
imprimer par voie numérique à l'aide d'un jet d'encre un décor (3) et un insert (4) sur un substrat (2) ; dans lequel ledit insert (4) comprend entre trois et huit zones de référence de couleurs (5) ; dans lequel lesdites zones de référence de couleurs (5) comprennent les encres numériques appliquées par jet d'encre que l'on utilise pour la composition du décor imprimé ; et dans lequel ledit insert (4) est situé sur une partie dudit substrat (2) ; dans lequel ladite partie est essentiellement exempte dudit décor (3) ;
mesurer les couleurs desdites zones de référence de couleur (5) de l'insert (4) ;
ajuster un ton d'une encre destinée à l'héliogravure sur la base de ladite mesure.

2. Procédé selon la revendication 1, dans lequel ladite mesure est mise en œuvre en utilisant un spectrophotomètre.

3. Procédé selon l'une quelconque des revendications 1 ou 2, dans lequel il comprend une étape supplémentaire au cours de laquelle on mélange le ton d'une encre destinée à l'héliogravure avec un mélange qui comprend des constituants supplémentaires qui sont choisis à partir d'un groupe comprenant des solvants, des agents de mise en dispersion, des agents d'amplification, des antioxydants et des stabilisateurs, afin d'obtenir une encre qui est destinée à une presse d'héliogravure.

4. Procédé selon l'une quelconque des revendications 1 à 3, dans lequel ladite encre destinée à l'héliogravure représente une encre durcissable par exposition au rayonnement ultraviolet, une encre à base d'eau ou une encre à base de solvant.

5. Procédé selon l'une quelconque des revendications 1 à 4, dans lequel ladite étape d'impression par voie numérique représente une impression numérique multipasse.

6. Procédé selon la revendication 1, dans lequel lesdites zones de référence de couleurs comprennent un mélange d'encres numériques appliquées par jet d'encre.

7. Procédé selon la revendication 1, dans lequel lesdites encres numériques appliquées par jet d'encre sont choisies parmi le groupe comprenant du cyan, du jaune, du magenta, du noir, du rouge, du cyan clair, du magenta clair et du marron.

8. Procédé selon la revendication 1, qui comprend le fait d'imprimer au moins deux décors imprimés (3), de préférence qui sont différents l'un de l'autre, qui sont situés à distance l'un de l'autre ; et dans lequel ledit au moins un insert (4) est imprimé entre lesdits au moins deux décors imprimés (3).

9. Procédé selon la revendication 8, dans lequel il comprend l'impression de multiples inserts (4), de préférence d'un insert (4) pour chaque décor imprimé.

10. Procédé selon la revendication 1, dans lequel ledit insert (4) est imprimé à côté d'un bord du substrat imprimé.

11. Procédé selon la revendication 1, dans lequel ledit substrat (2) comprend une couche réceptrice d'encre (7).
